# EUROPEAN PATENT APPLICATION

(11) **EP 3 379 320 A1**
(43) Date of publication of application: **26.09.2018**
(21) Application number: 16866244.3
(22) Date of filing: 11.11.2016
(51) Int. Cl.: G02B 27/01, B60K 35/00, G09G 3/02, G09G 3/20, G09G 3/34

(54) **HEAD-UP DISPLAY**

(30) Priority: 16.11.2015 JP 2015224142
(71) Applicant: Nippon Seiki Co., Ltd., Nagaoka-shi, Niigata 940-8580 (JP)
(72) Inventor: SEKIYA,Shun, Nagaoka Niigata (JP); TAKAHASHI,Yuichi, Nagaoka Niigata (JP)
(74) Representative: Jackson, Richard Eric
(86) International application number: PCT/JP2016/083484
(87) International publication number: WO 2017/086242

(57) **Abstract**

The purpose of the present invention is to provide a head-up display which does not easily cause a feeling of strangeness in the way in which a virtual image disappears with the movement of a point of view while achieving improved light use efficiency. An image display unit 10 displays, in a display area, a display image comprising a plurality of pixels 131, 132, 133, and emits display light L based on the display image, a projection unit 20 guides the display light L from the image display unit 10 to the viewer side, and generates an visual region 3 in which at least part of a virtual image V of the display image is visually recognizable, and a light distribution unit 14 (13) adjusts a position to which the display light L is distributed with respect to each pixel of the display area to which the display light L is emitted or with respect to an area including a plurality of pixels, and distributes the display light L such that an area that cannot be visually recognized as the virtual image V gradually increases from an end of the display area as the point view moves away from a predetermined reference point of the visual region 3.

## Description

### TECHNICAL FIELD

The present invention relates to a head-up display for allowing a viewer to view a virtual image.

### BACKGROUND ART

A conventional head-up display (hereinafter referred to as HUD) is disclosed in, for example, Patent Literature 1. Such a HUD is required to allow a viewer to recognize a virtual image even in a bright environment during daytime, and to generate a virtual image with high brightness. In order to meet such a demand, a virtual image with high brightness is realized by improving light use efficiency by concentrating display light for generating a virtual image on a predetermined area (eyebox) around a viewpoint of a viewer.

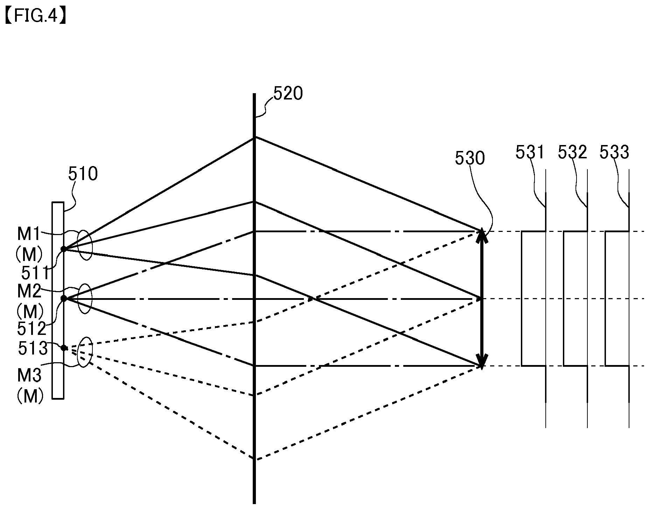

FIG. 4 schematically shows how display light travels in a conventional HUD and an intensity of light reaching an eyebox.

The conventional HUD mainly comprises an image display unit 510 such as a laser display or the like for displaying a display image (also referred to as a real image) and emitting display light M based on the display image, and a projection unit 520 for directing the display light M emitted from the image display unit 510 toward an eyebox 530 around a viewpoint of a viewer and generating a virtual image of a display image displayed on the image display unit 510.

Reference numerals 531, 532, 533 in FIG. 4 indicate light intensity distributions of display lights M1, M2, M3 distributed around a viewpoint of a viewer.

Display lights M1, M2, M3 emitted from arbitrary pixels, 511, 512, 513 of the image display unit 510 are diffused lights and are adjusted substantially uniformly throughout the eyebox 530 as indicated by reference numerals 531, 532, 533 in Fig. 4 after passing through the projection unit 520. Such a light intensity distribution in which a light intensity rises roughly vertically in a predetermined area is also referred to as a top hat shape light intensity distribution. The conventional HUD concentrates a light distribution of the display light M in a top hat shape in the eyebox 530, and allows a viewer to recognize a virtual image corresponding to each of pixels 511, 512, 513 of the image display unit 510 with substantially uniform brightness when a position of a viewer's viewpoint is within the eyebox 530.

### CITATION LIST

### PATENT LITERATURE

Patent Literature 1: Japanese Unexamined Patent Application Publication No. 2015-025977

### SUMMARY OF THE INVENTION

### PROBLEMS TO BE SOLVED BY THE INVENTION

However, in the conventional HUD, just as a viewer's viewpoint goes out of the eyebox, an entire virtual image becomes not recognizable, raising a possibility of causing a feeling of strangeness in the way in which a virtual image disappears.

In view of the above problem, it is an object of the present invention to provide a head-up display which does not easily cause a feeling of strangeness in the way in which a virtual image disappears with the movement of a viewpoint while improving light use efficiency.

### SOLUTION TO PROBLEM

The present invention adopts the following means in order to solve the above problem. A head-up display according to a first embodiment of the present invention, comprising: an image display unit which displays a display image comprising a plurality of pixels in a display area, and emits display light based on the display image; a projection unit which guides the display light from the image display unit to a viewer side, and generates a visual region where at least a part of a virtual image of the display image is visually recognizable; and a light distribution unit which adjusts a position where the display light emitted from the image display unit is distributed, wherein the light distribution unit adjusts a position where the display light is distributed for each pixel of the display area from which the display light is emitted or for each area including a plurality of pixels, and distributes the display light such that an area that cannot be visually recognized as the virtual image gradually increases from an end of the display area as a viewpoint moves away from a predetermined reference point of the visual region.

### EFFECT OF THE INVENTION

The present invention makes it difficult to cause a feeling of strangeness in the way in which a virtual image disappears with the movement of a viewpoint while improving light use efficiency.

Hereinafter, with reference to the attached drawings, an embodiment of a head-up display of the present invention (hereinafter referred to as HUD) will be described.

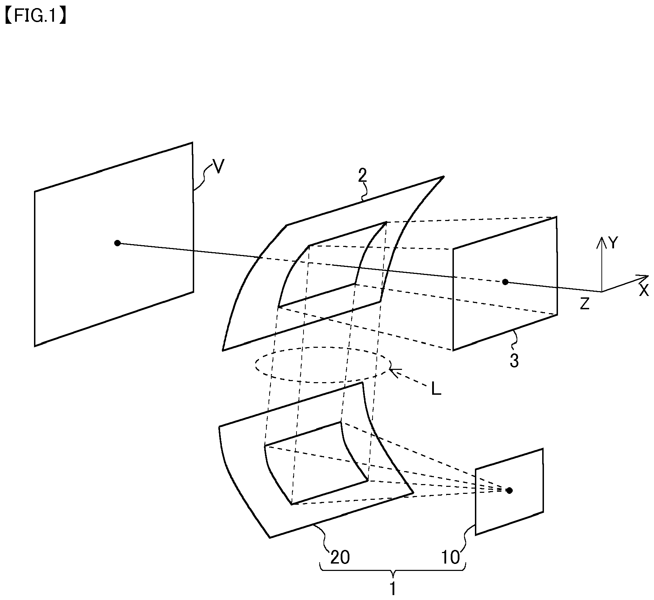

FIG. 1 is a schematic diagram showing a state in which a HUD 1 of the present embodiment directs a display light L to a visual region 3 around a viewer's viewpoint.

In the explanation of the present embodiment and the drawings used for this explanation, a direction in which a viewer visually recognizes a virtual image V is defined as a Z-axis direction, and a direction from a viewer to a virtual image V is defined as a Z-axis positive direction. Further, a lateral direction when a viewer visually recognizes a virtual image V is defined as an X-axis direction, and a right direction viewed from a viewer is defined as an X-axis positive direction. A vertical direction when a viewer visually recognizes a virtual image V is defined as a Y-axis direction, and an upward direction viewed from a viewer is defined as a Y-axis positive direction.

The HUD 1 according to the present embodiment is provided, for example, in a dashboard of a vehicle, and emits a display light L to a transmissive reflection unit 2, as shown in FIG. 1. The transmissive reflection unit 2 reflects the display light L from the HUD 1 to the viewer side. As a result, the HUD 1 can display the virtual image V on the back side (Z-axis positive direction) of the transmissive reflection unit 2 as viewed from the viewer. The transmissive reflection unit 2 is a windshield of a vehicle or the like, and is a transparent member that reflects the display light L of the HUD 1 to the viewer side. The transmissive reflection unit 2 may be a combiner or the like, which is a dedicated part for viewing the virtual image V of the HUD 1, and may be formed in a planar shape instead of a curved shape shown in FIG. 1.

The HUD 1 of FIG. 1 includes an image display unit 10 which displays a display image that is a real image, and emits a display light of the display image, and a projection unit 20 which reflects a display light L of the image display unit 10, and generates a visual region 3 capable of visually recognizing a virtual image V of the display image displayed by the image display unit 10.

The projection unit 20 is, for example, a concave mirror having a free curved surface, and may have an enlarging function for generating a virtual image V appropriately enlarging the display image displayed by the image display unit 10, a distortion correcting function for correcting a distortion of the virtual image V caused by a curved surface of the transmissive reflection unit 2, and an imaging position setting function for setting an image forming position where the virtual image V is formed. The projection unit 20 in this embodiment is an example configured as a concave mirror that is a reflective optical system, but a convex mirror or a plane mirror or the like other than a concave mirror may be appropriately added. Further, the projection unit 20 may be provided as a refractive optical system such as a lens.

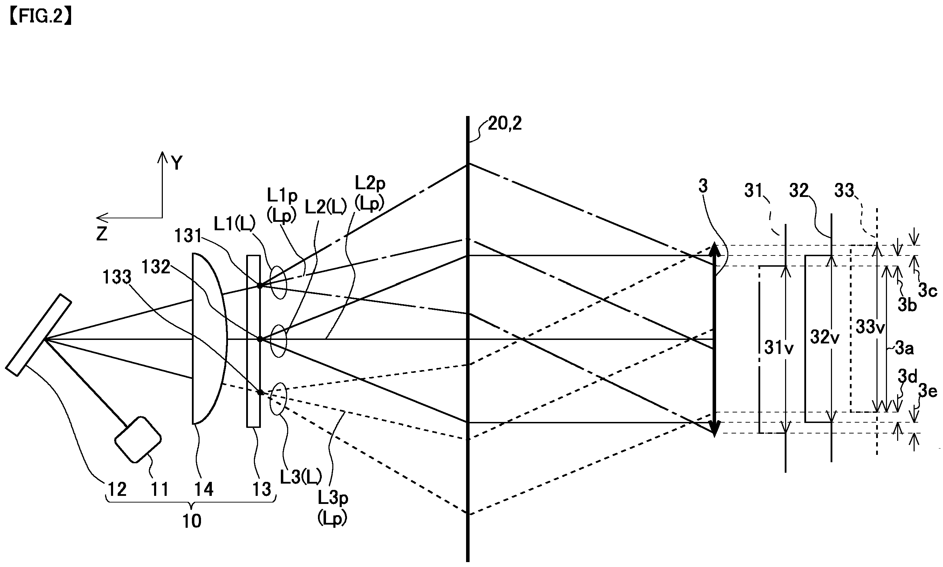

FIG. 2 is a diagram showing paths of display lights L1, L2, L3 emitted from each of pixels 131, 132, 133 of the image display unit 10 on the Y-Z plane, and light intensity distributions 31, 32, 33 of the display lights L1, L2, L3 in the Y-axis direction of the visual region 3.

The image display unit 10 displays a display image that is a real image, and emits the display lights L1, L2, L3 with adjusted light distribution from the respective pixels 131, 132, 133. The light distribution characteristics of the display lights L1, L2, L3 emitted from the respective pixels 131, 132, 133 are adjusted after passing through the projection unit 20 and the transmissive reflection unit 2 such that at least a part of the virtual image V has a substantially uniform top hat shape light distribution in a predetermined area within the visual region 3 that is an area where at least a part of the virtual image V is visually recognizable.

Assuming a ray of light as a center of the display light L to be a principal ray Lp, a principal ray L2p of the display light L2 emitted from the pixel 132 serving as a center of the display image displayed on the image display unit 10 is directed to approximately a center (reference point) of the visual region 3, and forms a substantially uniform light intensity distribution in an area 32v centered on the position reached by the principal ray L2p. A principal ray L1p of the display light L1 emitted from the pixel 131 to be an upper end of the display image (an end portion in the Y-axis positive direction of the display image) is directed to a position shifted downward from the center of the visual region 3, and forms a substantially uniform light intensity distribution in an area 31v centered on the position where the principal ray L1p has reached. A principal ray L3p of the display light L3 emitted from the pixel 133 to be a lower end of the display image (an end portion in the Y-axis negative direction of the display image) is directed to a position shifted upward from the center of the visual region 3, and forms a substantially uniform light intensity distribution in an area 33v centered on the position reached by the principal ray L3p.

In other words, the principal rays L1p, L2p, L3p of the display light L emitted from the pixels 131, 132, 133 of the display image cross one time on the way from the image display unit 10 to the visual region 3, whereby a position to be distributed is upside down. As a result, when a viewer's viewpoint is within the eyebox 3a that is a center area within the visual region 3, all of the display lights L1, L2, L3 emitted from the respective pixels 131, 132, 133 are distributed, and a viewer can visually recognize the entire virtual image V from the upper end 131 to the lower end 133 of the display image displayed on the image display unit 10. However, when the viewer's viewpoint is located in area 3b above the eyebox 3 a in the visual region 3, the display light L1 emitted from the pixel 131 at the upper end of the display image is not distributed, and the viewer cannot recognize the pixel 131 at the upper end of the display image displayed on the image display unit 10 as the virtual image V. When the viewer's viewpoint is located in an area 3c above the eyebox 3a in the visual region 3, the pixel 132 at the center of the display image cannot be recognized as the virtual image V. When the viewer's viewpoint is located in an area 3d below the eyebox 3a in the visual region 3, the display light L3 emitted from the pixel 133 at the upper end of the display image is not distributed, and the viewer cannot recognize the pixel 133 at the upper end of the display image displayed on the image display unit 10 as the virtual image V. When the viewer's viewpoint is located in an area 3e below the eyebox 3a in the visual region 3, the pixel 132 at the center of the display image cannot be recognized as the virtual image V. In other words, since the light distribution is performed by shifting the light distribution position of the display light L emitted from each pixel of the display image displayed by the image display unit 10 in the visual region 3, it is possible to prevent the entire virtual image V based on the display image from being invisible at a time along with the movement of the viewpoint.

Further, the widths 31v, 32v, 33v of the light distribution in the visual region 3 of the display light L emitted from the respective pixels 131, 132, 133 are uniformly adjusted, and the light distribution position of the display light L is adjusted to be largely deviated from the light intensity distribution 32 of the display light L emitted from the center pixel 132 as the emitted pixel moves away from the center pixel 132. As a result, the area within the visual region 3 capable of visually recognizing the pixels 131, 132, 133 is constant, an increase amount of the area where the virtual image V with respect to a movement amount of the viewpoint is not visually recognizable can be made constant, and the way of disappearing a virtual image with the movement of a viewpoint can be made natural.

Further, as the principal ray Lp of the display light L emitted from the pixels arranged in a primary direction (for example, a vertical Y-axis direction or a horizontal X-axis direction) reaches the visual region 3 after crossing one time, the position at which each display light L is distributed is reversed in the primary direction (for example, the vertical Y-axis direction). As a result, an area in which the virtual image V gradually becomes not to be recognized from an upper end increases as the viewpoint moves farther upward from the center point (an example of a predetermined reference point) of the visual region 3. An area in which the virtual image V gradually becomes not to be recognized from a lower end of the virtual image V as the center point of the visual region 3 as the viewpoint moves farther downward from the center point of the visual region 3. A visual recognition mode, in which an area where a visually recognizable image gradually becomes not to be recognizable from a predetermined direction increases when the viewpoint moves in the predetermined direction as described above, becomes the same as a common visual recognition mode of an image that is visually recognized when viewed through a predetermined opening. This makes it difficult to cause a feeling of strangeness in the way of disappearing a virtual image. The number of crossing of the principal ray Lp on the way from the image display unit 10 to the visual region 3 may be not only one time, but may be an odd number of times such as three times or five times.

A first embodiment of a specific configuration of the image display unit 10 will be described below.

The image display unit 10 in the first embodiment mainly comprises, for example, as shown in FIG. 2, a laser light source 11 for emitting laser light, a scanning unit 12 comprising a MEMS mirror or the like for generating the display image by two-dimensionally scanning a laser light emitted from the laser light source 11, a screen 13 for receiving the light scanned by the scanning unit 12 to display the display image and emitting a display light L based on the display image, and a field lens 14 located on an optical path of light traveling from the scanning unit 12 to the screen 13 and adjusting a direction of a principal ray Lp of the display light L emitted from each pixel of the screen 13.

The screen 13 is configured to diffuse the light from the scanning unit 12 and emit the display light L adjusted to a desired light distribution, and comprises, for example, a lens array screen, a diffuser screen, or the like. The screen 13 adjusts the light distribution characteristic of the display light L for each pixel or for each area including a plurality of pixels, forms an area where the light intensity distribution is substantially uniform in the visual region 3.

The field lens (light distribution unit) 14 is a refractive optical system having a positive power, which includes, for example, a one-side convex lens or the like having a flat surface on the scanning unit 12 side, adjusts a direction of the principal ray Lp of the display light L emitted from each pixel of the screen 13 or from each area including a plurality of pixels, and distributes the display light L to a desired position in the visual region 3. Alight distribution unit 14 in the present invention suffices to adjust the direction (angle) of the principal ray Lp of the emitted display light L, and may be, for example, a concave mirror as a reflective optical system having a positive power.

Incidentally, the screen 13 may comprise a double lens array screen whose entrance side and exit side are composed of a lens array. In this case, the screen 13 comprising a double lens array screen shifts the position of the lens array on the exit side with respect to the position of the lens array on the entrance side, whereby it is possible to adjust the light distribution position by adjusting an emission direction of the principal ray Lp of the display light L for each pixel or each area including a plurality of pixels. In other words, the screen 13 itself may be provided with a function as a light distribution unit for adjusting the position at which the display light L emitted from the screen 13 is distributed. In this case, the field lens 14 may be omitted. Further, the field lens 14 may be omitted by controlling the scanning unit 12 to enable adjustment of the angle of the display light L incident on each pixel of the screen 13.

In the image display unit 10 according to the first embodiment shown in FIG. 2, the display image is displayed on the screen 13 by using a laser scanning type display device (the laser light source 11 and the scanning unit 12). However, instead of the laser scanning type display device in the first embodiment, a display device using a DMD element or a reflection type liquid crystal display element may be applied as long as it is a projection type display device.

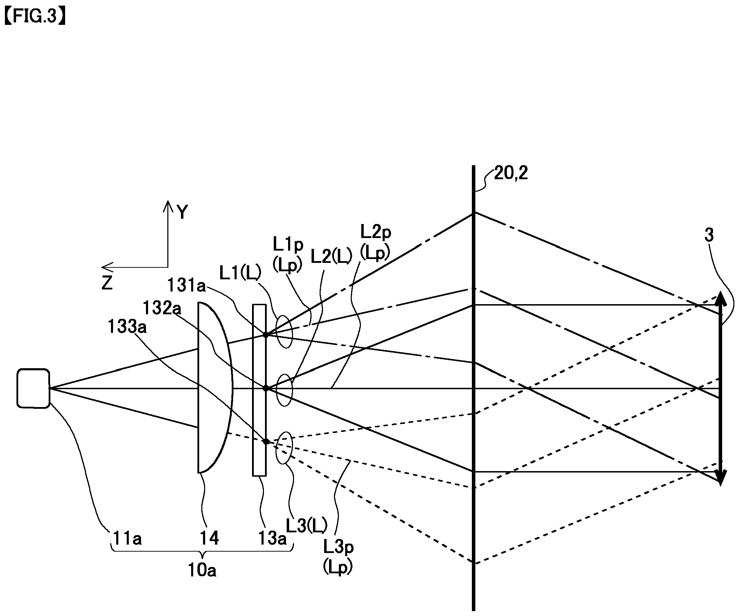

Hereinafter, a specific configuration of the image display unit 10a of the second embodiment will be described with reference to FIG. 3. The same reference numerals are given to the same configurations as those of the first embodiment and explanation will be omitted. The image display unit 10a in the second embodiment is different from the first embodiment in that a transmissive display element 13a such as a liquid crystal display element is used. The image display unit 10a in the second embodiment receives the light from the light source 11a, and selectively controls each pixel to display the display image on the transmissive display element 13a. The field lens (light distribution unit) 14 in the second embodiment adjusts the directions of the principal rays L1p, L2p, L3p of the display lights L1, L2, L3 emitted from the pixels 131a, 132a, 133a of the transmissive display element 13 by adjusting the incident angle of light traveling from the light source 11a to the transmissive display element 13a. Further, as in the first embodiment, the field lens distributes the display light L emitted from each pixel of the display image displayed by the image display unit 10 or from each area including a plurality of pixels by shifting the distribution position in the visual region 3. Therefore, it is possible to prevent the entire virtual image V based on the display image from becoming invisible at a time along with the movement of a viewpoint.

As explained above, the head-up display of the present invention comprises an image display unit 10 which displays a display image comprising a plurality of pixels 131, 132, 133 in a display area, and emits display light L based on the display image; a projection unit 20 which guides the display light L from the image display unit 10 to a viewer side, and generates a visual region 3 where at least a part of a virtual image V of the display image L is visually recognizable; and a light distribution unit 14 (13) which adjusts a position where the display light L emitted from the image display unit 10 is distributed, wherein the light distribution unit 14 (13) adjusts a position where the display light L is distributed for each pixel of the display area from which the display light L is emitted or for each area including a plurality of pixels, and distributes the display light L such that an area that cannot be visually recognized as the virtual image V gradually increases from an end of the display area as a viewpoint moves away from a predetermined reference point in the visual region 3. By thus shifting the position to be distributed in the visual region 3 for each pixel in the display area or for each area including a plurality of pixels, it is possible to prevent the entire virtual image V based on the display image from becoming invisible at a time along with the movement of the viewpoint. Further, since the display light L is distributed such that an area that cannot be visually recognized as the virtual image V gradually increases from an end of the display area with the movement of the viewpoint, it is possible to prevent a central portion of a main display area from suddenly becoming invisible.

Furthermore, when the viewpoint is within the eyebox 3a which is a central area in the visual region 3, the light distribution unit 14 (13) distributes the display light L so that the entire display area can be visually recognized as the virtual image V. As a result, as long as the viewpoint movement is within a predetermined area (eyebox 3a), the entire virtual image V can be visually recognized with good display quality with no luminance change.

In the above embodiment, the display light L is distributed to reach the visual region 3 after odd times of crossing of the principal ray Lp of the display light L emitted from each of the pixels 131, 132, 133 arranged in the vertical direction of the display area. However, the display light L may be distributed to reach the visual region 3 after odd times of crossing of the principal ray Lp of the display light L emitted from each pixel arranged in the horizontal direction of the display area.

The increase rate of the area where the virtual image V cannot be visually recognized according to the amount of movement of the viewpoint in a horizontal direction may be made smaller than the increase rate of the area where the virtual image V cannot be visually recognized according to the amount of movement of the viewpoint in the vertical direction. In other words, while the area where the virtual image V cannot be recognized gently increases when the viewpoint is moved in the horizontal direction, the area where the virtual image V cannot be recognized rapidly increases when the viewpoint is moved in the vertical direction. As a result, the distribution of the display light L in the vertical direction can be concentrated, and it is possible to moderate the increase of the area disabling the visual recognition of the virtual image V while improving the light use efficiency with respect to the horizontal direction in which the viewer strongly intends to move the viewpoint.

### BRIEF DESCRIPTION OF THE DRAWINGS

FIG. 1 is a schematic diagram showing a state that a head-up display of the present invention directs display light to a visual region.
FIG. 2 is a diagram showing a path of display light emitted from each pixel of an image display unit according to a first embodiment of the present invention and a light intensity distribution of the display light in an eyebox.
FIG. 3 is a diagram showing a path of display light emitted from each pixel of an image display unit according to a second embodiment of the invention and a light intensity distribution of the display light in an eyebox.
FIG. 4 is a diagram showing a path of display light emitted from each pixel of a conventional image display unit and a light intensity distribution of the display light in an eyebox.

### INDUSTRIAL APPLICABILITY

The present invention is applicable to a head-up display for generating a virtual image, and is particularly suitable for a head-up display mounted on a vehicle.

### DESCRIPTION OF REFERENCE NUMERALS

- 1: HUD (Head-up display)
- 2: Transmissive refection unit
- 3: Visual region
- 10: Image display unit
- 11: Laser light source
- 12: Scanning unit
- 13: Screen
- 14: Field lens (Light distribution unit)
- 20: Projection unit
- 31, 32, 33: Light intensity distribution
- L (L1, L2, L3): Display light
- Lp (L1p, L2p, L3p): Principal ray

## Claims

1. A head-up display comprising:
an image display unit which displays a display image comprising a plurality of pixels in a display area, and emits display light based on the display image;
a projection unit which guides the display light from the image display unit to a viewer side, and generates a visual region where at least a part of a virtual image of the display image is visually recognizable; and
a light distribution unit which adjusts a position where the display light emitted from the image display unit is distributed, wherein
the light distribution unit adjusts a position where the display light is distributed for each pixel of the display area from which the display light is emitted or for each area including a plurality of pixels, and
distributes the display light such that an area that cannot be visually recognized as the virtual image gradually increases from an end of the display area as a viewpoint moves away from a predetermined reference point of the visual region.

2. The head-up display according to claim 1, wherein
the light distribution unit distributes the display light so that an entire display area can be visually recognized as a virtual image within a predetermined area including the reference point of the visual region.

3. The head-up display according to claim 1 or 2, wherein the display light distributed to the visual region has a top hat shaped light intensity distribution.

4. The head-up display according to any one of claims 1 to 3, wherein
the light distribution unit distributes the display light to reach the visual region after odd times of crossing of a principal ray of the display light emitted from each of the pixels arranged in at least a primary direction of the display area.
